# EUROPEAN PATENT APPLICATION

(11) **EP 3 936 370 A1**
(43) Date of publication of application: **12.01.2022**
(21) Application number: 20184254.9
(22) Date of filing: 06.07.2020
(51) Int. Cl.: B60L 13/04, B60L 13/10, E01B 25/30

(54) **A TRAIN STRUCTURE**

(71) Applicant: Lövgren, Sten, 826 32 Söderhamn (SE)
(72) Inventor: Lövgren, Sten, 826 32 Söderhamn (SE)
(74) Representative: Bjerkéns Patentbyrå KB (Gävle)

(57) **Abstract**

A train structure, comprising: an underbody (1), a propulsion arrangement (3) for the propulsion of the train structure on a railway, first magnets (6, 7), comprising permanent magnets, arranged on the underbody (1) and configured to generate a lifting force on the underbody (1) when interacting with first magnets (8, 9) provided on a railway, and second magnets (10, 11) arranged on the underbody (1) and configured to generate a downforce on the underbody (1) when interacting with second magnets (12, 13) provided on a railway. The second magnets (10, 11) of the train structure are electromagnets and the train structure comprises a control system (14) for controlling said downforce by controlling electric power supplied to the electromagnets (10, 11).

## Description

### TECHNICAL FIELD

The present invention relates to a train structure, comprising an underbody, a propulsion arrangement for the propulsion of the train structure on a railway, first magnets, comprising permanent magnets, arranged on the underbody and configured to generate a lifting force on the underbody when interacting with first magnets provided on a railway, and second magnets arranged on the underbody and configured to generate a downforce on the underbody when interacting with second magnets provided on a railway.

### BACKGROUND

Different solutions for generating a magnetic lifting force on a train have been suggested in prior art. Permanent or electro magnets may be used for the purpose.

During travel at high speed substantial aerodynamic lifting forces may be generated on the train, and in some cases these lifting forces should at least to some extent be counteracted or compensated for.

It is an object of the present invention to suggest a train structure that is configured to generate a lifting force on a train and that is also configured to counteract unwanted vertical motion of the train structure due to, for example, the impact of aerodynamic lifting forces on the train during travel.

### SUMMARY

The object of the invention is achieved with a train structure, comprising
- an underbody,
- a propulsion arrangement for the propulsion of the train structure on a railway,
- first magnets, comprising permanent magnets, arranged on the underbody and configured to generate a lifting force on the underbody when interacting with first magnets provided on a railway,
- second magnets arranged on the underbody and configured to generate a downforce on the underbody when interacting with second magnets provided on a railway, said train structure being characterised in that
- the second magnets of the train structure are electromagnets and that the train structure comprises a control system for controlling said downforce by controlling electric power supplied to the electromagnets.

The second magnets, in combination with the control system, will thus provide for compensation for strong lifting forces acting on the train during travel, thereby stabilising the vertical position of the train structure with regard to the railway. The second magnets may also be used for adjusting the vertical position of the train structure with regard to the railway depending on the weight of the train structure, which may differ substantially between loaded and unloaded conditions.

According to one embodiment, the train structure comprises a first flange extending laterally from a first lateral side of the underbody and a second flange extending laterally from a second lateral side of the underbody, wherein a first magnet is provided on the lower side of the first flange and the second flange, and wherein a second magnet is provided on an upper side of the first flange and the second flange.

According to one embodiment, each of the first and second flanges extends along a major part of the length of the underbody.

According to one embodiment, the propulsion arrangement comprises at least two pair of wheels connected to the underbody. The train structure may thus be a wheel-driven structure, wherein the first and second magnets are used primarily for lifting and position-stabilisation in a vertical direction. The wheels should preferably have a flange on an inner side thereof, such that they provide for stabilisation in a lateral direction of the train structure when they are in engagement with a rail.

According to one embodiment, the train structure comprises an arrangement configured to exert a lifting force on the wheels towards an underside of the underbody, and the wheels are movably arranged in a direction towards and away from the underside of the underbody. Thereby, during travel when a requested speed has been obtained, the friction between wheels, in particular wheels that do not contribute to the propulsion of the train, may be reduced by lifting the wheels from the rail and letting the train be lifted mainly by the first magnets. According to one embodiment, the wheels on which said arrangement is configured to exert a lifting force comprise wheels not configured for the propulsion of the train. According to one embodiment, the wheels on which said arrangement is configured to exert a lifting force comprise wheels configured for the propulsion of the train.

According to one embodiment, the train structure comprises a position sensor configured to detect the position of the underbody, wherein the position sensor is connected to the control system and wherein the control system is configured to control said downforce on basis of input received from the position sensor.

According to one embodiment, the position sensor is arranged on any of the first flange and the second flange.

The invention also relates to a railway system comprising a train structure according to the invention and a railway comprising, on each side of the train structure, first magnets of the railway arranged below and facing the first magnets of the train structure, and second magnets of the railway, arranged above and facing the second magnets of the train structure.

Further features of the train structure of the present invention will be apparent in the following detailed description of an embodiment.

### BRIEF DESCRIPTION OF THE DRAWING

An exemplifying embodiment of the invention will be presented on the annexed drawing, on which:

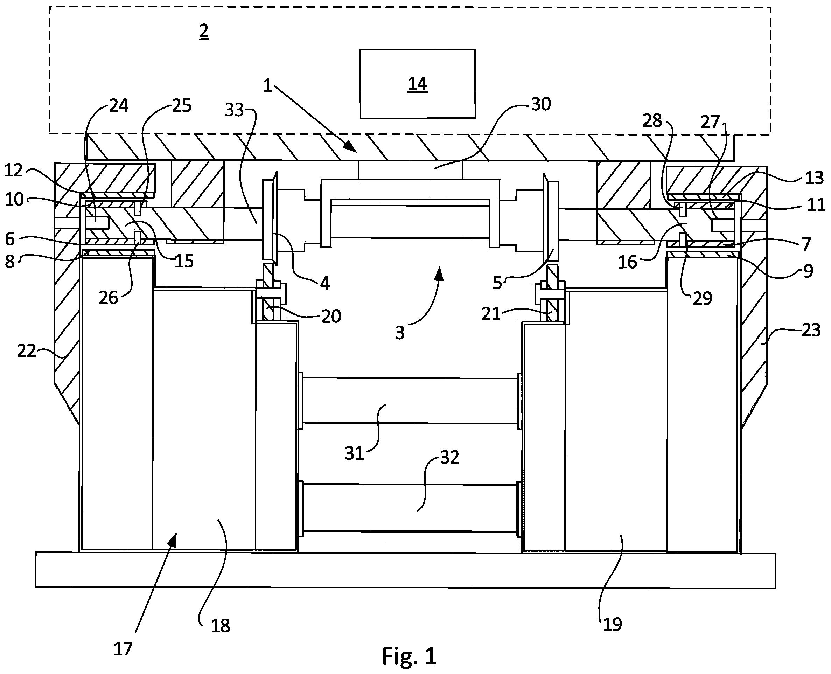

Fig. 1 is an elevational view of a train structure according to the invention arranged on a railway.

### DETAILED DESCRIPTION OF EMBODIMENTS

Fig. 1 shows a part of a railway system comprising a train structure according to the invention and a railway adapted for interaction with the train structure.

The train structure comprises an underbody 1. A waggon structure arranged on top of the underbody is indicated with reference number 2, and may comprise a wagon for carrying people or any kind of suitable structure for the transport of goods.

The train structure further comprises a propulsion arrangement 3 for the propulsion of the train structure on a railway. In the embodiment shown, the propulsion arrangement 3 comprises at least two pair of wheels 4, 5, connected to the underbody 1. Electric engines, not shown may be provided for the driving of the wheels 4, 5.

The train structure further comprises first magnets 6, 7, comprising permanent magnets, arranged on the underbody 1 and configured to generate a lifting force on the underbody when interacting with first magnets 8, 9 provided on the railway and forming part of the latter. The forces generated between said first magnets of the train structure and the railway are repelling forces.

There are also provided second magnets 10, 11 arranged on the underbody 1 and configured to generate a downforce on the underbody when interacting with second magnets 12, 13 provided on the railway and forming part of the latter. The forces generated between said second magnets of the train structure and the railway are repelling forces.

The second magnets 10, 11 of the train structure are electromagnets, and the train structure comprises a control system, here exemplified by a control unit 14, for controlling said downforce by controlling electric power supplied to the electromagnets 10, 11. The electromagnets 10, 11 are thus connected to an electric source. Preferably, the electric source is also used by the propulsion arrangement for the propulsion of the train.

The train structure further comprises a first flange 15 extending laterally from a first lateral side of the underbody 1 and a second flange 16 extending laterally from a second lateral side of the underbody 1. In the disclosed embodiment, the first and second flanges 15, 16 are formed by lateral end parts of, or lateral extensions from, a common bottom plate 33, which, in a longitudinal direction of the train structure, extends between adjacent pairs of wheels 4, 5, i.e between adjacent pairs of wheel boggies. A first magnet 6 of the train structure is provided on the lower side of the first flange 15 and a first magnet 7 is provided on lower side of the second flange 16. A second magnet 10 is provided on an upper side of the first flange 15 and second magnet 11 is provided on an upper side of the second flange 16. Each of the first and second flanges 15, 16 extends along a major part of the length of the underbody 1.

The railway comprises a first magnet holder structure 17 which comprises a support structure by which the first magnets 8, 9 of the railway are supported. The support structure comprises box girders, here indicated with reference numbers 18, 19. The box girders 18, 19 also act as support for rails 20, 21 of the railway. The left side box girder 18, carrying a first rail 20, is separated from the right side box girder 19, carrying a second rail 21. The separated left and right box girders 18, 19 are interconnected by cross beams 31, 32. The support structure 17 further comprises arms 22, 23 connected to the respective box girder 18, 19 and carrying the second magnets 12, 13 of the railway.

The train structure further comprises position sensors 24-29 configured to detect the position of the underbody in relation to the support structure 17 and the first and second magnets of railway. The position sensors 24-29 are connected to the control unit 14 of the control system, and the control system is configured to control said downforce on basis of input received from the position sensors 24-29. The control system is configured to control the downforce generated by the second magnets such that the distance between the first magnets 6, 7 of the train structure and the first magnets 8, 9 of the railway is within a predetermined range.

The train structure comprises an arrangement 30, for example a hydraulic system, configured to exert a lifting force on the wheels 4, 5 towards an underside of the underbody 1, and the wheels 4, 5 are movably arranged in a direction towards and away from the underside of the underbody 1. The arrangement 30 for exerting a lifting force on the wheels 4, 5 is connected to the control unit 14 of the control system, and the control system is configured to enforce said arrangement 30 to lift the wheels 4, 5 from contact with the rails 20, 21 as a response to predetermined conditions being fulfilled during travel, such as a speed above a predetermined speed and that the requested predetermined position of the train structure with regard to the support structure can be upheld solely by means of the forces generated by the first magnets.

## Claims

1. A train structure, comprising
- an underbody (1),
- a propulsion arrangement (3) for the propulsion of the train structure on a railway,
- first magnets (6, 7), comprising permanent magnets, arranged on the underbody (1) and configured to generate a lifting force on the underbody (1) when interacting with first magnets (8, 9) provided on a railway,
- second magnets (10, 11) arranged on the underbody (1) and configured to generate a downforce on the underbody (1) when interacting with second magnets (12, 13) provided on a railway, said train structure being **characterised in that**
- the second magnets (10, 11) of the train structure are electromagnets and that the train structure comprises a control system (14) for controlling said downforce by controlling electric power supplied to the electromagnets (10, 11).

2. A train structure according to claim 1, **characterised in that** it comprises a first flange (15) extending laterally from a first lateral side of the underbody (1) and a second flange (16) extending laterally from a second lateral side of the underbody (1), and that a respective first magnet (6, 7) is provided on the lower side of the first flange (15) and the second flange (16), and that a respective second magnet (10, 11) is provided on an upper side of the first flange (15) and the second flange (16).

3. A train structure according to claim 2, **characterised in that** each of the first and second flanges (15, 16) extends along a major part of the length of the underbody (1).

4. A train structure according to any of claims 1-3, **characterised in that** the propulsion arrangement (3) comprises at least two pair of wheels (4, 5) connected to the underbody (1),

5. A train structure according to claim 4, **characterised in that** the train structure comprises an arrangement (30) configured to exert a lifting force on the wheels (4, 5) towards an underside of the underbody (1), and that the wheels (4, 5) are movably arranged in a direction towards and away from the underside of the underbody (1).

6. A train structure according to any one of claims 1-5, **characterised in that** it comprises a position sensor (24-29) configured to detect the position of the underbody (1), and that the position sensor (24-29) is connected to the control system (14) and that the control system (14) is configured to control said downforce on basis of input received from the position sensor (24-29).

7. A train structure according to claim 2 and claim 6, **characterised in that** the position sensor (24-29) is arranged on any of the first flange and the second flange.

8. A railway system comprising a train structure according to any one of claims 1-7 and a railway comprising, on each side of the train structure, first magnets (8, 9) of the railway arranged below and facing the first magnets (6, 7) of the train structure, and second magnets (12, 13) of the railway, arranged above and facing the second magnets (10, 11) of the train structure.
